# EUROPÄISCHE PATENTSCHRIFT

(11) **EP 3 018 331 B1**
(45) Veröffentlichungstag und Bekanntmachung des Hinweises auf die Patenterteilung: **14.06.2017**
(21) Anmeldenummer: 15188111.7
(22) Anmeldetag: 02.10.2015
(51) Int. Cl.: F02M 25/022, F02M 25/028, F02B 47/02

(54) **BRENNKRAFTMASCHINE**
INTERNAL COMBUSTION ENGINE
MOTEUR À COMBUSTION INTERNE

(30) Priorität: 04.11.2014 DE 102014222467
(43) Veröffentlichungstag der Anmeldung: 11.05.2016
(73) Patentinhaber: Bayerische Motoren Werke Aktiengesellschaft, 80809 München (DE)
(72) Erfinder: Rubbert, Dr. Stephan, 85757 Karlsfeld (DE); Staar, Bernhard, 82131 Gauting (DE)

(56) Entgegenhaltungen:
- DE-A1- 19 918 591
- DE-A1-102005 053 495
- GB-A- 2 497 770
- US-A- 4 632 067
- US-A- 4 986 223
- US-A1- 2008 110 812
- US-A1- 2014 048 619
- US-B1- 7 013 845

## Beschreibung

Die Erfindung betrifft eine Brennkraftmaschine, bei der in die Verbrennungsluft Wasser eingespritzt wird, wobei das Wasser in einem Vorratsbehälter bevorratet ist.

Eine derartige Brennkraftmaschine ist bekannt. Durch die Zufuhr von Wasser zum Kraftstoff-Luft-Gemisch können der Kraftstoffverbrauch gesenkt und die Schadstoffemission reduziert werden. Das erforderliche Wasser wird in einem Vorratsbehälter mitgeführt und muss regelmäßig nachgefüllt werden. Alternativ kann es auch z. B. durch Kondensat von der Klimaanlage oder aufgefangenes Oberflächenwasser aufgefüllt werden.

Beim Nachfüllen besteht jedoch die Gefahr einer Falschbetankung, und es kann mit Schmutzpartikeln verunreinigtes Wasser in den Vorratsbehälter gelangen. Wird das Wasser längere Zeit nicht verwendet, kann es durch Bio-Kontamination verschlammen und durch die Aufnahme von CO₂ den Säuregehalt erhöhen. Bei niedrigen Außentemperaturen und hohem Füllstand kann darüber hinaus der Vorratsbehälter durch Eisbildung zerstört werden. US 2014/048619 A1 offenbart eine Brennkraftmaschine mit einem Einspritzsystem zum Einspritzen von Wasser in einen Ansaugkrümmer der Brennkraftmaschine, wobei ein Flüssigkeit-Rückgewinnungssammelbehälter und ein weiterer Sammelbehälter vorgesehen sind. US 4 986 223 A zeigt eine Vorrichtung zum Einspritzen von Heißdampf in eine Luftansaugung einer Brennkraftmaschine mit einem Wasser-Reservetank und einem Wasser-Zulauftank. US 4 632 067 A offenbart eine Dampf-Einspritzanlage für eine Brennkraftmaschine mit einem Erzeugungsbehälter und einem Reservebehälter. Aus der US 2008/110812 A1 ist ein Aufbereitungssystem von aus Dieselkraftstoff getrenntem Wasser mit einem Hauptbehälter und einem Nebenbehälter bekannt. US 7 013 845 B1 beschreibt eine Brennkraftmaschine mit einem Wassereinspritzsystem zum Einspritzen von Wasserdampf in eine Luftansaugung der Brennkraftmaschine, und einem Vorratsbehälter und einem Wasserbehälter.

Es ist daher Aufgabe der vorliegenden Erfindung, hier Abhilfe zu schaffen.

Diese Aufgabe wird bei einer Brennkraftmaschine der eingangs genannten Art erfindungsgemäß dadurch gelöst, dass der Vorratsbehälter aus einem Sammeltank und einem Haupttank besteht, die derart miteinander verbunden sind, dass über einen am Sammeltank vorgesehenen Wasserzulauf zugeführtes Wasser nur über den Sammeltank in den Haupttank gelangen kann, wobei in dem Wasserzulauf in Strömungsrichtung des zugeführten Wassers hintereinander liegend ein Überlauf, ein erster Füllstandssensor, ein Filter, ein zweiter Füllstandsensor und eine Pumpe angeordnet sind.

Die Unteransprüche beinhalten vorteilhafte Weiterbildungen und Ausgestaltungen der Erfindung.

Vorteilhafterweise ist in dem Wasserzulauf ein die Pumpe überbrückendes Bypassventil vorgesehen.

Gemäß einer vorteilhaften Ausgestaltung sind in dem Sammeltank ein Überlauf und ein Ablassventil angeordnet
Des Weiteren ist gemäß einer vorteilhaften Weiterbildung in dem Sammeltank ein Leitfähigkeitssensor angeordnet. Falls der Leitfähigkeitssensor verunreinigtes Wasser diagnostiziert, kann die Verbindung zwischen dem Sammeltank und dem Haupttank gesperrt werden.

In dem Haupttank sind gemäß einer bevorzugten Ausgestaltung eine Heizung, ein Temperatursensor, ein Füllstandssensor und ein Ablassventil angeordnet.

Infolge der erfindungsgemäßen Ausgestaltung kann nachgefülltes Wasser durch den Leitfähigkeitssensor kontrolliert und bei chemischer Verunreinigung, Falschbetankung usw. durch das Ablassventil entfernt werden. Somit gelangt nur gefiltertes Wasser ohne chemische oder sonstige Verunreinigungen in den nachgeschalteten Haupttank.

Durch einen Filter im Wasserzulauf können Schmutzpartikel abgefangen werden. Darüber hinaus kann der Filter durch rückströmendes Wasser aus dem Sammeltank rückgespült und gereinigt werden.

Falls das Wasser längere Zeit nicht genutzt wurde, kann der Sammeltank und auch der Haupttank über das Ablassventil entleert werden. Somit kann die gesamte Wasserfüllung z. B. während einer Inspektion in der Werkstatt erneuert werden.

Bei stehendem Fahrzeug kann regelmäßig eine geringe Wassermenge abgelassen werden mit Partikeln, die sich am Boden des Sammeltanks abgesetzt haben. Diese Funktion kann bei einem hinreichenden Wasservorrat aktiviert werden. Falls genügend Wasser zur Verfügung steht und der Sammeltank ausreichend gefüllt ist, kann zusätzlich z. B. auch der Behälter für die Scheibenwaschflüssigkeit aufgefüllt werden.

Infolge der erfindungsgemäßen Ausgestaltung wird somit sichergestellt, dass nur sauberes Wasser ohne chemische oder sonstige Verunreinigungen für die Wassereinspritzung verwendet wird.

Weitere Einzelheiten, Merkmale und Vorteile der Erfindung ergeben sich aus der nachfolgenden Beschreibung anhand der Zeichnung. Es zeigt:

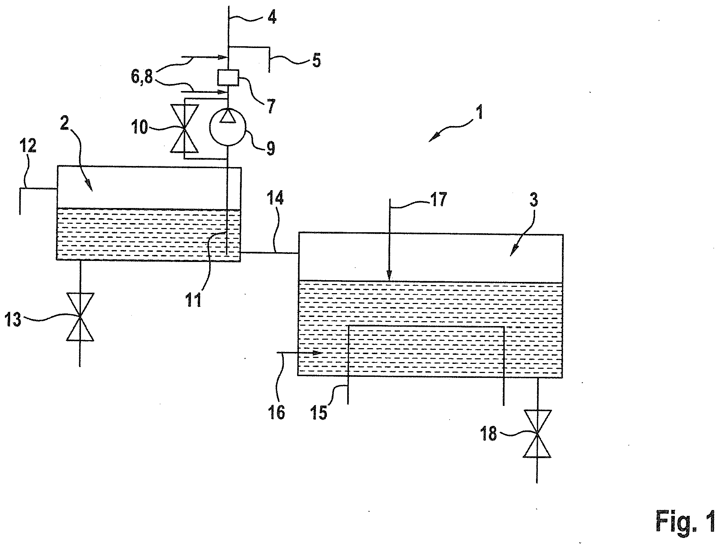

- Figur 1: schematisch den Aufbau eines in einer Brennkraftmaschine verwendbaren erfindungsgemäßen Vorratsbehälters.

In Figur 1 ist der schematische Aufbau eines Vorratsbehälter 1 gezeigt, welcher in Verbindung mit einer Brennkraftmaschine mit Wassereinspritzung Verwendung findet.

Der Vorratsbehälter 1 besteht aus einem Sammeltank 2 und einem Haupttank 3, die derart miteinander verbunden sind, dass nachgefülltes Wasser zunächst in den Sammeltank 2 und von diesem in den Haupttank 3 gelangt.

Zum Nachfüllen weist der Sammeltank 2 einen Wasserzulauf 4 auf, der in den Sammeltank 2 mündet. In dem Wasserzulauf 4 sind in Fließrichtung des nachzufüllenden Wasser hintereinander ein Überlauf 5, ein erster Füllstandsensor 6, ein Filter 7, ein zweiter Füllstandssensor 8 und eine Pumpe 9 angeordnet. Die Pumpe 9 kann mittels eines Bypassventils 10 überbrückt werden.

In dem Sammeltank 2 ist des Weiteren ein Leitfähigkeitssensor 11 angeordnet, mit dessen Hilfe die Qualität des Wassers überwacht werden kann. Außerdem weist der Sammeltank 2 einen Überlauf 12 und ein Ablassventil 13 auf.

Der Sammeltank 2 ist über eine Leitung 14, in der ein Absperrventil angeordnet ist, mit dem Haupttank 3 verbunden.

In dem Haupttank 3 sind eine Heizung 15, ein Temperatursensor 16, ein Füllstandssensor 17 und ein Ablassventil 18 angeordnet.

Dem Sammeltank 2 kann über den Wasserzulauf 4 Wasser zugeführt werden, das beispielsweise bei einer Inspektion nachgefüllt oder auch von der Klimaanlage oder von sich im Wasserkasten angesammelten Oberflächenwasser stammen kann. Das zugeführte Wasser wird mit dem Leitfähigkeitssensor 11 bewertet. Falls das Wasser chemisch verunreinigt ist, was durch den Leitfähigkeitssensor 11 erkannt wird, öffnet das Ablassventil 13 und das Wasser wird entsorgt.

Der im Wasserzulauf 4 angeordnete Filter 7 verhindert, dass das Wasser durch Partikel verunreinigt ist.

Im Normalbetrieb ist das die Pumpe 9 überbrückende Bypassventil 10 geöffnet und das zugeführte Wasser fließt in den Sammeltank 2. Durch die Füllstandssensoren 6 und 8 vor und hinter dem Filter 7 kann ein verstopfter Filter 7 diagnostiziert werden. Falls der Wasserzulauf 4 nach dem Filter 7 leer und vor dem Filter 7 mit Wasser gefüllt ist, ist der Filter 7 verstopft und wird durch die Pumpe 9 mit rückströmendem Wasser gespült. Dabei wird das Bypassventil 10 geschlossen.

Das im Sammeltank 2 gefilterte Wasser, das nicht chemisch oder sonst wie verunreinigt ist, gelangt über die Leitung 14 in den Haupttank 3. Der Füllstandssensor 17 sowie der Temperatursensor 16 in dem Haupttank 3 zeigen an, ob das System betriebsbereit ist.

Zum Auftauen bei niedrigen Temperaturen ist die Heizung 15 im Haupttank 3 vorgesehen, die beispielsweise auch mit dem Kühlwasser des Motors beheizt werden kann. Die Heizung 15 dient ferner dazu, eine Biokontamination zu vermeiden.

Falls das Wasser im Haupttank 3 längere Zeit nicht benutzt wurde, kann es ebenfalls durch das Ablassventil 18 entsorgt werden, z. B. nach längerer Standzeit.

Durch ihr Volumen und ihre Kontur sind der Sammeltank 2 und der Haupttank 3 so ausgeführt, dass gefrierendes Wasser bei einem parkenden Fahrzeug sie nicht zerstören kann.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1: Vorratsbehälter
- 2: Sammeltank
- 3: Haupttank
- 4: Wasserzulauf
- 5: Überlauf
- 6: Füllstandssensor
- 7: Filter
- 8: Füllstandssensor
- 9: Pumpe
- 10: Bypassventil
- 11: Leitfähigkeitssensor
- 12: Überlauf
- 13: Ablassventil
- 14: Leitung
- 15: Heizung
- 16: Temperatursensor
- 17: Füllstandssensor
- 18: Ablassventil

## Patentansprüche

1. Brennkraftmaschine, bei der in die Verbrennungsluft Wasser eingespritzt wird, wobei das Wasser in einem Vorratsbehälter bevorratet ist, und der Vorratsbehälter (1) aus einem Sammeltank (2) und einem Haupttank (3) besteht, die derart miteinander verbunden sind, dass über einen am Sammeltank (2) vorgesehenen Wasserzulauf (4) zugeführtes Wasser nur über den Sammeltank (2) in den Haupttank (3) gelangen kann, **dadurch gekennzeichnet, dass** in dem Wasserzulauf (4) in Strömungsrichtung des zugeführten Wassers hintereinander liegend angeordnet sind: ein Überlauf (5), ein erster Füllstandssensor (6), ein Filter (7), ein zweiter Füllstandsensor (8) und eine Pumpe (9).

2. Brennkraftmaschine nach Anspruch 1, **dadurch gekennzeichnet, dass** in dem Wasserzulauf (4) ein die Pumpe (9) überbrückendes Bypassventil (10) vorgesehen ist.

3. Brennkraftmaschine nach einem der vorhergehenden Ansprüche, **dadurch gekennzeichnet, dass** in dem Sammeltank (2) ein Überlauf (12) und ein Ablassventil (13) angeordnet sind.

4. Brennkraftmaschine nach einem der vorhergehenden Ansprüche, **dadurch gekennzeichnet, dass** in dem Sammeltank (2) ein Leitfähigkeitssensor (11) angeordnet ist.

5. Brennkraftmaschine nach einem der vorhergehenden Ansprüche, **dadurch gekennzeichnet, dass** in dem Haupttank (3) eine Heizung (15) angeordnet ist.

6. Brennkraftmaschine nach einem der vorhergehenden Ansprüche, **dadurch gekennzeichnet, dass** in dem Haupttank (3) ein Temperatursensor (16) angeordnet ist.

7. Brennkraftmaschine nach einem der vorhergehenden Ansprüche, **dadurch gekennzeichnet, dass** in dem Haupttank (3) ein Füllstandssensor (17) und ein Ablassventil (18) angeordnet sind.

## Claims

1. An internal combustion engine, in which water is injected into the combustion air, wherein the water is stored in a reservoir, and the reservoir (1) comprises of a collecting tank (2) and a main tank (3) which are interconnected such that water which is fed via a water intake (4), provided on the collecting tank (2), can only pass into the main tank (3) via the collecting tank (2), **characterised in that** arranged in tandem in the water intake (4) in the direction of flow of the supplied water are: an overflow (5), a first filling level sensor (6), a filter (7), a second filling level sensor (8) and a pump (9).

2. An internal combustion engine according to claim 1, **characterised in that** a bypass valve (10) which bypasses the pump (9) is provided in the water intake (4).

3. An internal combustion engine according to any of the preceding claims, **characterised in that** an overflow (12) and a drain valve (13) are arranged in the collecting tank (2).

4. An internal combustion engine according to any of the preceding claims, **characterised in that** a conductivity sensor (11) is arranged in the collecting tank (2).

5. An internal combustion engine according to any of the preceding claims, **characterised in that** a heating means (15) is arranged in the main tank (3).

6. An internal combustion engine according to any of the preceding claims, **characterised in that** a temperature sensor (16) is arranged in the main tank (3).

7. An internal combustion engine according to any of the preceding claims, **characterised in that** a filling level sensor (17) and a drain valve (18) are arranged in the main tank (3).

## Revendications

1. Moteur à combustion interne dans lequel de l'eau est injectée dans l'air de combustion, cette eau étant stockée dans un réservoir de stockage (1) et constitué par un réservoir collecteur (2) et un réservoir principal (3) qui sont reliés entre eux de sorte que l'eau transférée par une arrivée d'eau (4) située sur le réservoir collecteur (2) ne puisse parvenir dans le réservoir principal (3) que par l'intermédiaire de ce réservoir collecteur (2),
**caractérisé en ce que**
dans l'arrivée d'eau (4) sont montés les uns derrière les autres, dans la direction de circulation de l'eau transférée, un trop-plein (5), un premier détecteur de niveau (6), un filtre (7), un second détecteur de niveau (8) et une pompe (9).

2. Moteur à combustion interne conforme à la revendication 1,
**caractérisé en ce qu'**
il est prévu dans l'arrivée d'eau (4), une soupape de dérivation (10) qui contourne la pompe (9).

3. Moteur à combustion interne conforme à l'une des revendications précédentes,
**caractérisé en ce qu'**
un trop-plein (12) et une soupape de vidange (13) sont montés dans le réservoir collecteur (2).

4. Moteur à combustion interne conforme à l'une des revendications précédentes,
**caractérisé en ce qu'**
un détecteur de conductibilité (11) est monté dans le réservoir collecteur (2).

5. Moteur à combustion interne conforme à l'une des revendications précédentes,
**caractérisé en ce qu'**
un chauffage (15) est monté dans le réservoir principal (3).

6. Moteur à combustion interne conforme à l'une des revendications précédentes,
**caractérisé en ce qu'**
un détecteur de température (16) est monté dans le réservoir principal (3).

7. Moteur à combustion interne conforme à l'une des revendications précédentes,
**caractérisé en ce qu'**
un détecteur de niveau (17) et une soupape de vidange (18) sont montés dans le réservoir principal (3).
